# EUROPEAN PATENT APPLICATION

(11) **EP 4 057 665 A1**
(43) Date of publication of application: **14.09.2022**
(21) Application number: 19951551.1
(22) Date of filing: 07.11.2019
(51) Int. Cl.: H04W 16/14, H04W 72/04, H04W 72/08

(54) **TERMINAL AND TRANSMISSION METHOD**

(71) Applicant: NTT DOCOMO, INC., Chiyoda-Ku Tokyo 100-6150 (JP)
(72) Inventor: KUMAGAI, Shinya, Tokyo 100-6150 (JP); HARADA, Hiroki, Tokyo 100-6150 (JP); NAGATA, Satoshi, Tokyo 100-6150 (JP)
(74) Representative: Hoffmann Eitle
(86) International application number: PCT/JP2019/043678
(87) International publication number: WO 2021/090440

(57) **Abstract**

A terminal is provided. The terminal includes a reception unit configured to receive control information indicating an uplink transmission; a control unit configured to determine a type of LBT to be performed for the uplink transmission based on at least one of, for the uplink transmission indicated by the control information, a gap, a type of a channel or a signal, and a transmission time length; and a transmission unit configured to perform the uplink transmission by applying the type of LBT determined by the control unit.

## Description

### [Technical Field]

The present invention relates to a terminal in a wireless communication system.

### [Background Art]

In NR (New Radio), a successor system to the Long Term Evolution (LTE) (also referred to as "5G"), technologies that satisfy requirements such as high capacity systems, high data transmission rate, low delay, simultaneous connection of multiple terminals, low cost, and power saving are being considered.

In addition, existing LTE systems support the use of frequency bands different from licensed bands licensed to telecom carriers (i.e., unlicensed bands, unlicensed carriers, and unlicensed CC) in order to expand the frequency bands. As the unlicensed bands, 2.4 GHz band, 5 GHz band, or 6 GHz band where Wi-Fi (registered trademark) or Bluetooth (registered trademark) can be used is assumed.

Specifically, Rel.13 supports Carrier Aggregation (CA), which integrates the carrier (CC) of the licensed band and the carrier (CC) of the unlicensed band. Thus, communication with the license band using the unlicensed band is called License-Assisted Access (LAA).

In a wireless communication system that communicates using an unlicensed band with a licensed band, in a downlink, the base station apparatus performs channel sensing (carrier sensing) to verify whether other devices (e.g., base station apparatus, user terminal, Wi-Fi device, etc.) have been transmitted prior to transmitting data in the unlicensed band. Once the sensing results confirm that there is no transmission of other devices, the transmission can be performed for a predetermined period of time with an opportunity to transmit. This operation is called the Listen Before Talk. The predetermined period is also referred to as the Channel Occupancy Time (COT).

In the 3GPP, it is considered that the user terminal receives information, from the base station apparatus, indicating whether a slot is within the COT acquired by the base station apparatus. For example, the user terminal can perform UL transmission without an LBT or with an LBT with a short time in the COT acquired by the base station apparatus.

### [Prior Art Documents]

### [Non-Patent Documents]

[Non-Patent Document 1] 3GPP TS 38.331 V15.7.0 (2019-09)
[Non-Patent Document 2] 3GPP TS 38.213 V15.7.0 (2019-09)
[Non-Patent Document 3] 3GPP TS 38.212 V15.7.0 (2019-09)

### [Summary of Invention]

### [Problem to be Solved by the Invention]

There are several categories of LBT depending on the length of the carrier sense, etc. However, there is a problem in the prior art in that it is not clear which category of LBT should be executed when the user terminal performs UL transmission.

The present invention has been made in view of the above-described points, and is intended to provide a technique that enables a user terminal to determine appropriately the category of LBT to be performed when performing uplink transmission.

### [Means for Solving Problems]

According to the disclosed technique, there is provided a terminal including:
a reception unit configured to receive control information indicating an uplink transmission;
a control unit configured to determine a type of LBT to be performed for the uplink transmission based on at least one of, for the uplink transmission indicated by the control information,
   a gap,
   a type of a channel or a signal, and
   a transmission time length; and
a transmission unit configured to perform the uplink transmission by applying the type of LBT determined by the control unit.

### [Effects of the Invention]

According to the disclosed technique, there is provided a technique that allows a user terminal to determine appropriately the category of LBT to be performed when performing an uplink transmission.

### [Brief Description of Drawings]

Fig. 1 is a diagram for explaining a wireless communication system according to an embodiment of the present invention;
Fig. 2 is a diagram for explaining a wireless communication system according to an embodiment of the present invention;
Fig. 3 is a diagram for explaining a notification method of SFI ;
Fig. 4 is a diagram for explaining a notification method of SFI ;
Fig. 5 is a diagram for explaining an example of a notification method for an LBT category;
Fig. 6 is a diagram illustrating an operation example 1 according to an embodiment of the present invention;
Fig. 7 is a diagram showing an operation example 2 according to an embodiment of the present invention;
Fig. 8 is a flowchart for explaining an example of the operation of the user terminal 20;
Fig. 9 is a diagram showing an example of a Gap;
Fig. 10 is a diagram showing an example of a Gap;
Fig. 11 is a diagram showing an example of a functional configuration of the base station apparatus 10 according to an embodiment of the present invention;
Fig. 12 is a diagram showing an example of a functional configuration of a user terminal 20 according to an embodiment of the present invention;

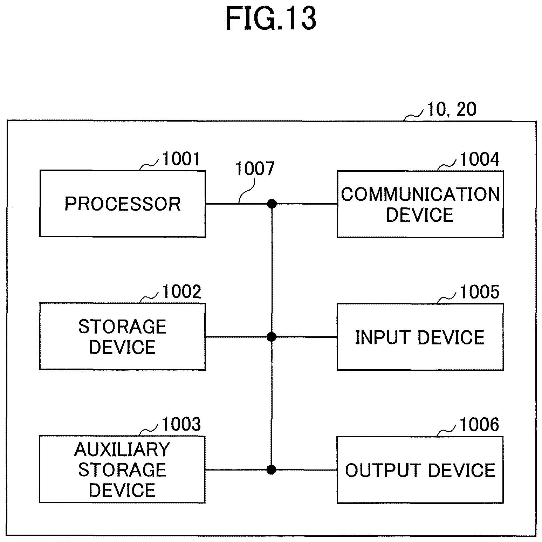

Fig. 13 is a diagram illustrating an example of the hardware configuration of the base station apparatus 10 or the user terminal 20 according to an embodiment of the present invention.

### [Mode for Carrying Out the Invention]

Hereinafter, embodiments of the present invention will be described with reference to the drawings. The embodiments described below are examples, and the embodiments to which the present invention is applied are not limited to the following embodiments.

In operating a wireless communication system according to an embodiment of the present invention, existing techniques are used as appropriate. The existing technology is, for example, an existing NR. The present invention is applicable not only to NR but also to any wireless communication system.

In embodiments of the present invention, the duplex method may be a TDD (Time Division Duplex) method, a FDD (Frequency Division Duplex) method, or any other method (e.g., Flexible Duplex, etc.).

In an embodiment of the present invention, the wireless parameter or the like being "configured" may mean that a predetermined value is preconfigured or a wireless parameter notified from the base station apparatus 10 or the user terminal 20 is configured.

### (System Configuration)

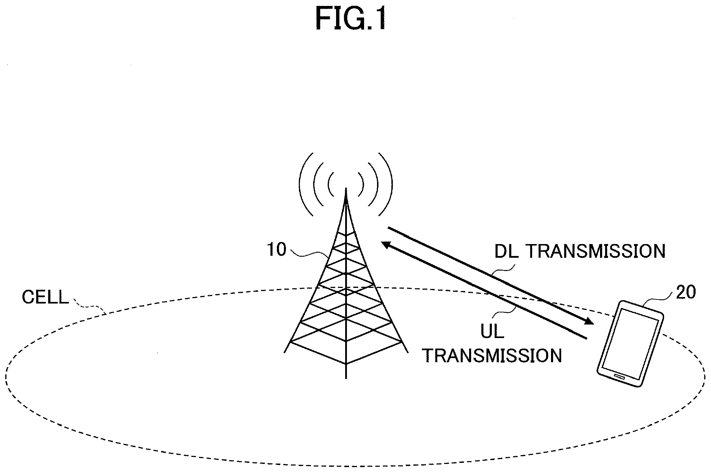

Fig. 1 is a diagram illustrating a wireless communication system according to an embodiment of the present invention. The wireless communication system in an embodiment of the present invention includes a base station apparatus 10 and a user terminal 20, as shown in FIG. 1. In FIG. 1, one base station apparatus 10 and one user terminal 20 are shown, but this is an example and more than one base station apparatuses and more than one user terminals may be provided. The user terminal 20 may be referred to as a "terminal. " The wireless communication system according to this embodiment may be referred to as an NR-U system.

The base station apparatus 10 is a communication device that provides one or more cells and performs wireless communication with the user terminal 20. The physical resources of the radio signal are defined in the time domain and the frequency domain, the time domain may be defined in slots or OFDM symbols, and the frequency domain may be defined in subbands, subcarriers or resource blocks.

As shown in FIG. 1, the base station apparatus 10 transmits control information or data in DL (Downlink) to the user terminal 20 and receives control information or data in UL (Uplink) from the user terminal 20. Both the base station apparatus 10 and the user terminal 20 are capable of beam forming to transmit and receive signals. Also, both the base station apparatus 10 and the user terminal 20 can apply communication by MIMO (Multiple Input Multiple Output) to DL or UL. The base station apparatus 10 and the user terminal 20 may both communicate via a CA (Carrier Aggregation) via a SCell (Secondary Cell) and a PC (Primary Cell).

The user terminal 20 is a communication device having a wireless communication function such as a smartphone, a cellular phone, a tablet, a wearable terminal, a communication module for M2M (Machine-to-Machine), or the like. As shown in Fig. 1, the user terminal 20 utilizes various communication services provided by the wireless communication system by receiving control information or data in DL from the base station apparatus 10 and transmitting control information or data in UL to the base station apparatus 10.

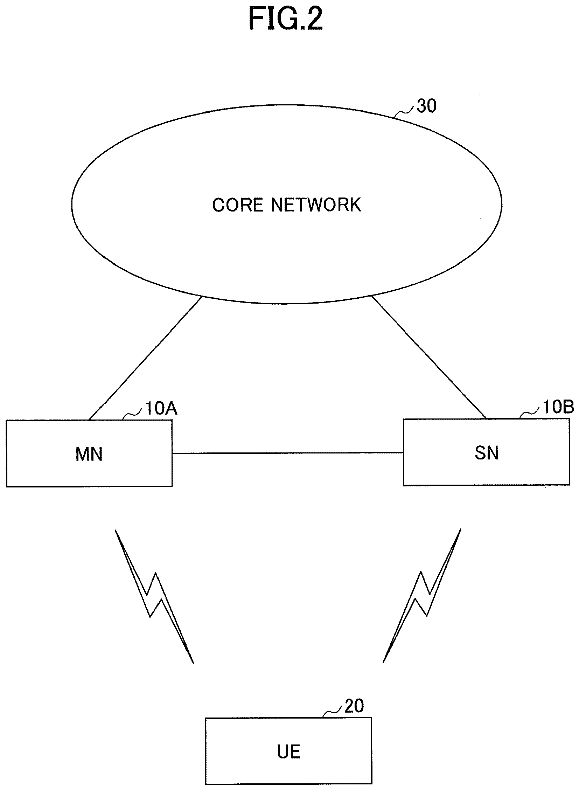

Fig. 2 shows an example of a configuration of a wireless communication system when NR-DC (NR-Dual connectivity) is executed. As shown in FIG. 2, a base station apparatus 10A serving as an MN (Master Node) and a base station apparatus 10B serving as an SN (Secondary Node) are provided. The base station apparatus 10A and the base station apparatus 10B are each connected to a core network. The user terminal 20 communicates with both the base station apparatus 10A and the base station apparatus 10B.

The cell group provided by the base station apparatus 10A that is an MN is called the MCG (Master Cell Group), and the cell group provided by the base station apparatus 10B that is an SN is called the SCG (Secondary Cell Group). The operations of the present embodiment may be performed in any of the configurations of Figs. 1 and 2.

In the wireless communication system according to the present embodiment, the LBT described above is executed. The base station apparatus 10 or the user terminal 20 acquires the CO when the LBT result is idle, performs transmission, and does not perform transmission when the LBT result is busy (LBT-busy).

The LBT categories according to this embodiment include, for example, Category 1, Category 2 16µs, Category 2 25µs, and Category 4. Hereinafter, each category will be described with reference to the case where the user terminal 20 performs transmission. The LBT category is also called "LBT Type".

In category 1, the user terminal 20 transmits without performing an LBT. In category 2 16µs, the user terminal 20 performs a carrier sense of 16 µs prior to transmission and transmits when the channel is idle. In category 2 25µs, the user terminal 20 performs a 25 µs carrier sense prior to transmission and transmits when the channel is idle.

In Category 4, the user terminal 20 randomly generates a value (random backoff) within a predetermined range before transmission, repeatedly performs a carrier sense at a fixed sensing slot time, and transmits when it is confirmed that the channel is idle by the generated value.

The wireless communication system according to this embodiment may perform a carrier aggregation (CA) operation using an unlicensed CC and a licensed CC, a dual connectivity (DC) operation using an unlicensed CC and a licensed CC, or a stand-alone (SA) operation using an unlicensed CC alone. CA, DC, or SA may be performed by any one system of NR and LTE. DC may be performed by at least two of NR, LTE, and other systems.

The user terminal 20 may assume the presence of a signal (such as a reference signal (RS) (e.g., Demodulation Reference Signal (DMRS))) in a PDCCH or group common PDCCH (group common (GC)-PDCH) to detect a transmitting burst from the base station apparatus 10.

The base station apparatus 10 may transmit a specific PDCCH (PDCCH or GC-PDCCH) containing a specific DMRS notifying the CO start at the start of CO of the base station apparatus initiation. At least one of a specific PDCCH and a specific DMRS may be referred to as a CO start notification signal. For example, the base station apparatus 10 transmits the CO start notification signal to one or more user terminals 20, and the user terminal 20 can recognize the CO triggered by the base station apparatus when a specific DMRS is detected.

### (Example of operation, problem)

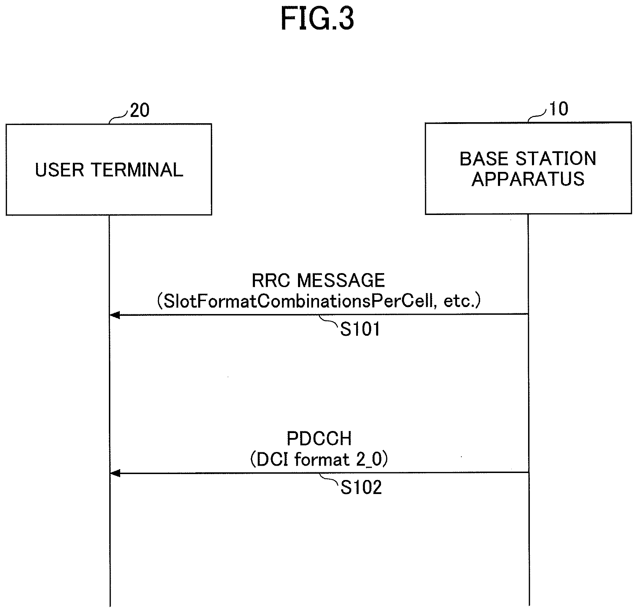

Fig. 3 shows an example of the operation of the wireless communication system according to the present embodiment. This operation is related to COT structure notification.

As shown in Fig. 3, in S101, the base station apparatus 10 transmits an RRC message to the user terminal 20, and the user terminal 20 receives the RRC message. This RRC message contains the SlotFormatCombinationsPerCell information element for each serving cell. In S101, the base station apparatus 10 may notify the user terminal 20 of an RNTI value (called SFI-RNTI) for monitoring DCI format 2_0.

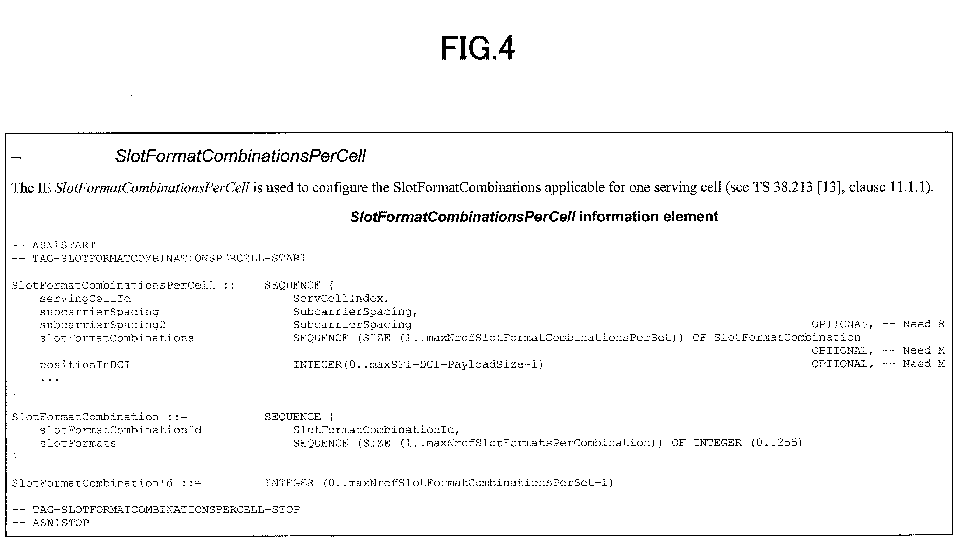

FIG. 4 shows SlotFormatCombinationsPerCell described in Non-Patent Document 1. One SlotFormatCombinationsPerCell contains one or more SlotFormatCombinations and a bit position (positInDCI) in DCI Format 2_0 of the SlotFormatCombinationID for a serving cell configured in the user terminal 20.

One SlotFormatCombination contains the SlotFormatCombinationID and slotFormats. SlotFormats is the information in Non-Patent Document 2 in which the format numbers (any number from 0 to 255) described in Table 11.1.1-1 are arranged by the number of slots. The format number may also be referred to as a format index. The number of slots may be a value corresponding to a period during which the user terminal 20 monitors the DCI format 2_0.

In S101, the user terminal 20 receives SlotFormatCombinationsPerCell for each serving cell and acquires the corresponding information of the SlotFormatCombinationID and the slot format for each serving cell. The acquired corresponding information is stored in a storage device, such as a memory, of the user terminal 20.

In S102 of Fig. 3, the base station apparatus 10 transmits a DCI format 2_0 to the user terminal 20 by a GC-PDCCH (which may be a PDCCH), and the user terminal 20 receives the DCI format 2_0.

The DCI Format 2_0 described in Non-Patent Document 2 and Non-Patent Document 3 may be used as the DCI Format 2_0 in this embodiment, or the DCI Format 2_0 modified from the DCI Format 2_0 described in Non-Patent Document 2 and Non-Patent Document 3 may be used.

The DCI Format 2_0 stores a SlotFormatCombinationID (also called SFI-index) for the relevant serving cell in the bit position notified in the RRC message for each serving cell.

The user terminal 20 reads slotFormatCombinationID (SFI-index) at a bit position corresponding to a serving cell to determine slotFormats in the serving cell.

For example, suppose that the user terminal 20 receives the DCI format 2_0 at the head portion of the slot 1 and reads the SlotFormatCombinationID = 2. If the user terminal 20 recognizes that the SlotFormatCombinationID=2 is {0, 1, 0, 1}, based on the setting in the RRC, the user terminal 20 can recognize that the format of the slot 1 is format 0, the format of the slot 2 is format 1, the format of the slot 3 is format 0, and the format of the slot 4 is format 1.

According to the present embodiment, by using the DCI format 2_0, the base station apparatus 10 can notify the user terminal 20 whether a slot in the time domain is within the COT acquired by the base station apparatus 10. As an example, if the format number of a slot in slotFormats is a specific number, the user terminal 20 determines that it is a slot outside the COT acquired by the base station apparatus 10, and if it is a number other than a specific number, it determines that it is a slot in the COT acquired by the base station apparatus 10.

Whether or not the slot is within the COT acquired by the base station apparatus 10 is referred to as a CO time domain structure. Further, by using the DCI format 2_0, the CO frequency domain structure may be notified from the base station apparatus 10 to the user terminal 20.

Note herein that the term "notification" may be replaced with "indication". The English language corresponding to "Notify" may also be indicate (indication).

With the above-described COT structure notification, the user terminal 20 can determine whether each slot is in the COT acquired by the base station apparatus 10. As an example, the user terminal 20 executes a category 4 LBT when performing UL transmission in a slot other than the COT acquired by the base station apparatus 10. This is because, outside the COT acquired by the base station apparatus 10, transmission and reception can be performed by nearby devices other than the base station apparatus 10.

However, the user terminal 20 does not know whether to execute the LBT in the UL transmission in the COT acquired by the base station apparatus 10 or which category to use when executing the LBT.

Accordingly, it may be notified from the base station apparatus 10 to the user terminal 20 whether to execute the LBT and which category to use when executing the LBT, when the user terminal 20 performs UL transmission in the COT acquired by the base station apparatus 10.

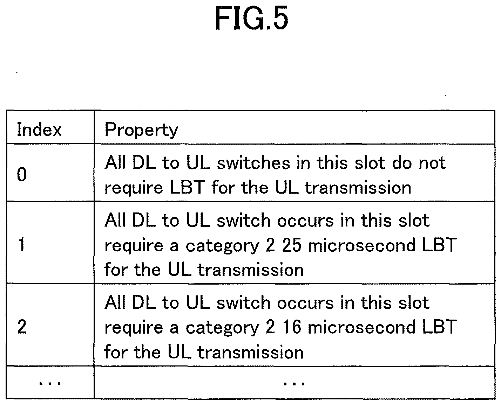

For example, it is contemplated that the base station apparatus 10 transmits to the user terminal 20 a DCI format 2_0 indicating slotFormats having an index indicating an LBT category added to the SFI value (slot format number) of each target slot. This method is "Option 1". FIG. 5 is an example of an index showing the LBT category appended to the SFI value.

For example, when the user terminal 20 receives the DCI format 2_0 indicating slotformats having an index of 1 shown in FIG. 5 for a slot, the user terminal 20 performs the LBT of category 2 25 µs and then performs UL transmission in the slot.

In addition to the above-described method, it is also contemplated that the base station apparatus 10 transmits, to the user terminal 20, a DCI (downlink control information) for instructing UL transmission, containing information, indicating whether to execute LBT and which category to use when executing the LBT. This method is designated as "Option 2".

However, regarding the option 1, if the user terminal 20 is unable to detect the DCI format 2_0 transmitted by the GC-PDCCH or if the user terminal 20 is not configured to monitor the GC-PDCCH, the user terminal 20 cannot know the LBT type applicable to UL transmission.

For option 2, a 2-bit overhead occurs to notify the expected LBT Type (Category 1, Category 2 16µs, Category 2 25µs, Category 4) in DCI.

Hereinafter, a technique for notifying the user terminal 20 of an appropriate LBT type while maintaining the DCI size as much as possible in the UL transmission of NR-U will be described by solving the above-described problem. In the following example, when category 4 is notified as LBT Type in UL transmission, the slot of the UL transmission is outside the COT acquired by the base station apparatus 10, and when category 4 is not notified as LBT Type in UL transmission, the slot of the UL transmission is within the COT acquired by the base station apparatus 10. However, this is an example. The operations described below, whether inside or outside the COT, may be applied.

### (Basic Operation Example)

An operation example 1 and an operation example 2 will be described as basic operation examples of the communication system according to the present embodiment.

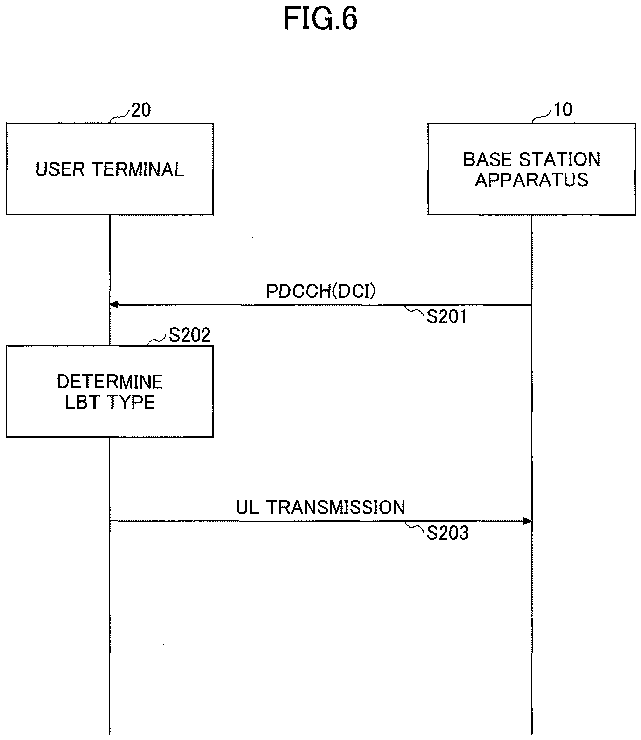

Fig. 6 is a sequence diagram illustrating an operation example 1. In S201, the base station apparatus 10 transmits the DCI instructing UL transmission to the user terminal 20 through the PDCCH. As used herein, a "DCI instructing UL transmission" includes a DCI that schedules DL reception with UL transmission as well as a DCI that directly schedules UL transmission. In a DCI scheduling DL reception with UL transmission, the UL transmission may be scheduled with UL grant included in the DL reception (data by PDSCH). In a DCI for scheduling DL reception with UL transmission, the UL transmission may be HARQ feedback transmission using PUCCH.

The DCI transmitted in S201 includes one bit indicating whether the LBT type applicable to UL transmission indicated by the DCI is category 4 or not.

In S202, when it is indicated in the DCI received in S201 that the LBT type at the time of UL transmission is Category 4, the user terminal 20 determines that the LBT type at the time of UL transmission is Category 4. Otherwise, the LBT type is determined by the method described below.

In S203, the user terminal 20 performs UL transmission based on the LBT type determined by S202.

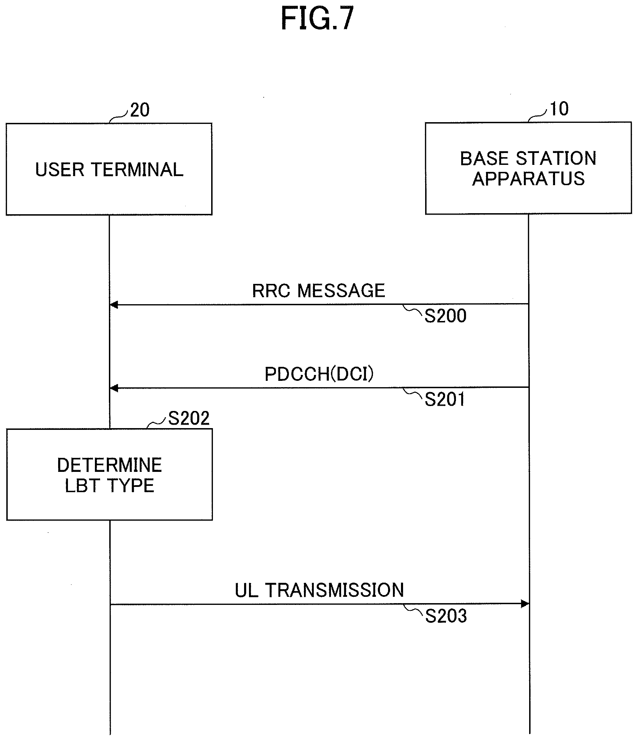

Fig. 7 is a sequence diagram illustrating an operation example 2. In S200, the user terminal 20 receives an RRC message (an example of upper layer signaling) from the base station apparatus 10. The processing after this is the same as that of operation example 1.

In operation example 2, the RRC message received by the user terminal 20 in S200 includes configuration information used in the LBT type determination in S202. In S202, if it is indicated in the DCI received in S201 that the LBT Type at the time of UL transmission is Category 4, the user terminal determines that the LBT Type at the time of UL transmission is Category 4. Otherwise, the user terminal uses the configuration information to determine the LBT Type by the method described below.

### (Detailed Operation Example)

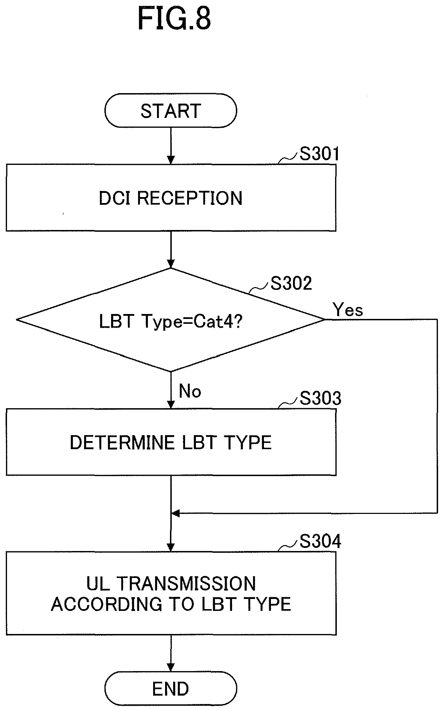

Referring to the flowchart of Fig. 8, an example of the operation of the user terminal 20 will be described in more detail. In S301, the user terminal 20 receives the DCI from the base station apparatus 10. The DCI is a DCI that instructs UL transmission. "DCI instructing UL transmission" includes both a DCI instructing UL transmission directly and a DCI instructing UL transmission indirectly.

For example, the DCI received by the user terminal 20 at S301 is UL grant instructing to transmit PUSCH, DCI scheduling RAR, DCI with DL assignment with PUCCH transmission, DCI format 0_1, 1_1, 2_3 including SRS requests, etc. However, these are examples, and the DCI received by S301 is not limited thereto.

The DCI received by S301 includes 1-bit information indicating whether the LBT type to be applied to UL transmission indicated by the DCI is category 4 or not.

In S302, the user terminal 20 determines whether or not the LBT type to be applied to UL transmission instructed by the DCI is category 4 based on the 1-bit information included in the DCI received by the S301. If the decision in S302 is Yes (LBT Type is category 4), the process proceeds to S304. If the decision in S302 is No (LBT Type is not category 4), the process proceeds to S303.

In S303, the user terminal 20 determines the LBT type to be applied to the UL transmission based on the information on the UL transmission instructed by the DCI received at S301. "Information on UL transmission instructed by the DCI" may be information not included in DCI. It is only necessary that "Information on UL transmission instructed by DCI" is information related to the UL transmission.

The DCI received in S301 does not include information that directly indicates the LBT Type other than whether or not the LBT Type is Category 4. However, the user terminal 20 determines the LBT Type based on the information on the UL transmission instructed by the DCI. The determination method may be predetermined in the specification or the like and configured in advance in the user terminal 20. Alternatively, as illustrated in Fig. 7, a parameter (a threshold value or the like) for determination may be configured by the upper layer signaling from the base station apparatus 10 to the user terminal 20, and a determination may be performed based on the parameter.

More specifically, in S303, the user terminal 20 determines the LBT type to be applied to the UL transmission based on at least one of information on {gap, the UL signal/CH type, and the UL transmission duration} which is notified (including configured) from the base station apparatus 10.

In S304, the user terminal 20 performs UL transmission by executing LBT (or without executing LBT) according to the determined LBT type. The DCI of S301 may not include information (1 bit, etc.) indicating whether the LBT type applicable to UL transmission is category 4 or not. For example, when it is determined that UL transmission is performed in a COT by a method other than the information, the user terminal 20 may determine the LBT type in S303.

Hereinafter, a specific determination method for each of {gap, the UL signal/CH type, and the UL transmission duration} that are the determination criteria in S303 will be described as Examples 1 to 3.

### <Example 1: Gap>

In Example 1, the DCI instructing UL transmission includes information indicating a gap (time interval in which neither DL nor UL is transmitted) from the time position at the end of the symbol for DL transmission to the start time position for UL transmission indicated by DCI.

For example, when the user terminal 20 detects that the time length of the gap is 0 by the DCI, the user terminal 20 determines that the LBT type is category 1. For example, when the user terminal 20 detects that the time length of the gap is 16 µs by the DCI, the LBT type is determined to be category 2 16µs. For example, when the user terminal 20 detects that the time length of the gap is 25 µs by the DCI, the LBT type is determined to be category 2 25 µs.

When the LBT Type is Category 2, the user terminal 20 performs a carrier sense for the period of the above-described Gap when switching from DL to UL and performs UL transmission instructed by the DCI when it detects that the channel is empty (idle).

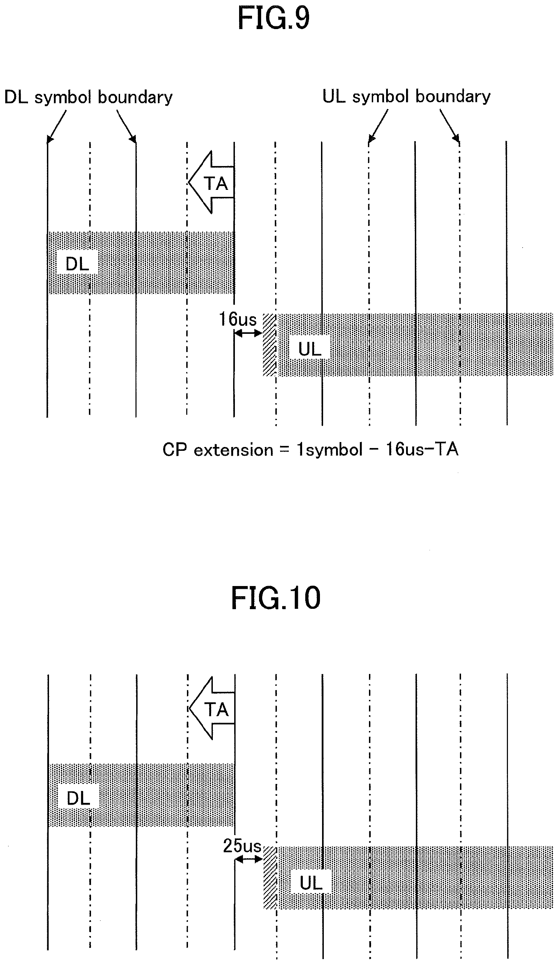

A more specific example assuming that the UL transmission is a PUSCH transmission will be described with reference to Figs. 9 and 10. Fig. 9 and Fig. 10 are diagrams illustrating a specific case in which a time length of one symbol is idle when switching from DL to UL.

In the example of FIG. 9, the position after one symbol from the end of the DL is the UL transmission start symbol position notified to the user terminal 20 by the DCI indicating UL transmission. This notification is made, for example, by SLIV.

In the example shown in Fig. 9, TA (Timing Advance) is 0.5 symbols long. In this example, the DCI instructing UL transmission includes information instructing that the CP (cyclic prefix) of the head OFDM symbol in the corresponding UL transmission be extended by "symbol length-16µs-TA" as information of a Gap.

The user terminal 20 starts UL transmission based on the information of the Gap and the TA from the time position shifted forward by TA+ "symbol length-16µs-TA" with respect to the indicated transmission start time position, resulting in a gap of 16 µs as shown in the figure. The user terminal 20 performs category 2 LBT at this Gap. The example of Fig. 10 is an example where the Gap length is 25 µs.

### <Example 2: UL signal/CH type>

In Example 2, the user terminal 20 determines an LBT type based on a type of UL signal or a type of UL channel in UL transmission instructed by a DCI.

For example, when the user terminal 20 detects that UL transmission instructed by a DCI is a PUCCH transmission or a PUSCH transmission including UCI (Uplink Control Information), it determines that the LBT type at the time of UL transmission executed by the PUCCH or the PUSCH is category 1.

For example, when the user terminal 20 detects that the UL transmission instructed by the DCI includes PUSCH transmission without UCI or SRS transmission, it determines that the LBT type at the time of UL transmission executed for the PUSCH or at the time of SRS transmission is category 2 (16 µs or 25 µs).

When the UL transmission indicated by the DCI includes PUSCH transmission without UCI or SRS transmission, which of a category 2 of 16 µs or 25 µs is applied may be predetermined, or the user terminal 20 may be configured with the information by upper layer signaling (e.g., S200 in Fig. 7).

In any of predetermined and configuration by upper layer signaling, the user terminal 20 applies a category 2 16µs when the UL transmission is SRS transmission, and a category 2 25µs when the UL transmission is PUSCH transmission without UCI, for example.

### <Example 3: UL transmission duration>

In Example 3, the user terminal 20 determines an LBT type based on a transmission time length in UL transmission instructed by a DCI . The transmission time length, for example, for PUSCH, is a transmission symbol length specified in SLIV. In the case of PUCCH, for example, the transmission time length is a symbol length (symbol number) of PUCCH configured in the user terminal 20 in the upper layer signaling. In the case of SRS, for example, the transmission time length is a symbol length (symbol number) of the SRS configured in the user terminal 20 in the upper layer signaling.

For example, when the user terminal 20 detects that the transmission time length in UL transmission instructed by the DCI is X [ms] or less, the user terminal 20 determines that the LBT type applied at the time of transmission of the UL is category 1.

The above-described threshold value X may be predetermined or configured to the user terminal 20 by upper layer signaling (e.g., S200 of Fig. 7).

When the user terminal 20 detects that the transmission time length in the UL transmission instructed by the DCI is greater than X [ms], the user terminal 20 determines that the LBT type applied to the UL transmission is category 2 (16 µs or 25 µs). Which of a category 2 of 16 µs or 25 µs is applied may be predetermined or configured to the user terminal 20 by upper layer signaling (e.g., S200 in Fig. 7).

In addition to X, Y [ms] (Y>X) may be predetermined or Y may be configured to the user terminal 20 by a higher layer signaling (e.g., S200 in Fig. 7) with respect to which of the category 2 of 16 µs or 25 µs is applied. When the user terminal 20 detects that the transmission time length of the UL transmission is Y or less, the LBT type applied to the UL transmission is determined to be category 2 16µs, and when the user terminal 20 detects that the transmission time length of the UL transmission is larger than Y, the LBT type applied to the UL transmission is determined to be category 2 25µs.

### <Example 4: Combination>

The user terminal 20 may determine the LBT Type using any one of the three criteria of {gap, UL signal/CH type, and UL transmission duration}, or it may determine the LBT Type using any two of the three criteria, or it may determine the LBT Type using all three criteria.

When determining the LBT Type using any two of the three criteria, the user terminal 20 uses two of {gap, UL signal/CH type} to determine the LBT Type, or uses two of {gap, UL transmission duration} to determine the LBT Type, or uses two of {UL signal/CH type, UL transmission duration} to determine the LBT Type.

As an example in which the LBT type is determined using two, for example, the user terminal 20 decides to execute category 2 LBT only for PUSCH without UCI for UL transmission or for UL transmission including SRS in UL signal/CH type determination, and if the UL transmission duration is Z [ms] or less (Z is preconfigured, or is configured in upper layer signaling (e.g., S200 in Fig. 7)), the user terminal 20 executes category 2 16 µs, and if the UL transmission duration is greater than Z [ms], the terminal 20 executes category 2 25 µs.

In addition, as an example in the case of determining the LBT type using two criteria, for example, the user terminal 20 decides to execute category 2 LBT only for PUSCH without UCI for UL transmission or for UL transmission including SRS in UL signal/CH type determination, and further if the Gap is 16 µs, the user terminal 20 decides to execute category 2 16 µs, and if the Gap is 25 µs, the user terminal 20 decides to execute category 2 25 µs.

As described above, according to the technique according to the present embodiment, the user terminal 20 can appropriately determine the category of the LBT to be performed when performing UL transmission while maintaining the DCI size as much as possible.

### (Equipment configuration)

Next, a functional configuration example of the base station apparatus 10 and the user terminal 20 that perform the processing and operations described above will be described.

### <Base Station Apparatus 10>

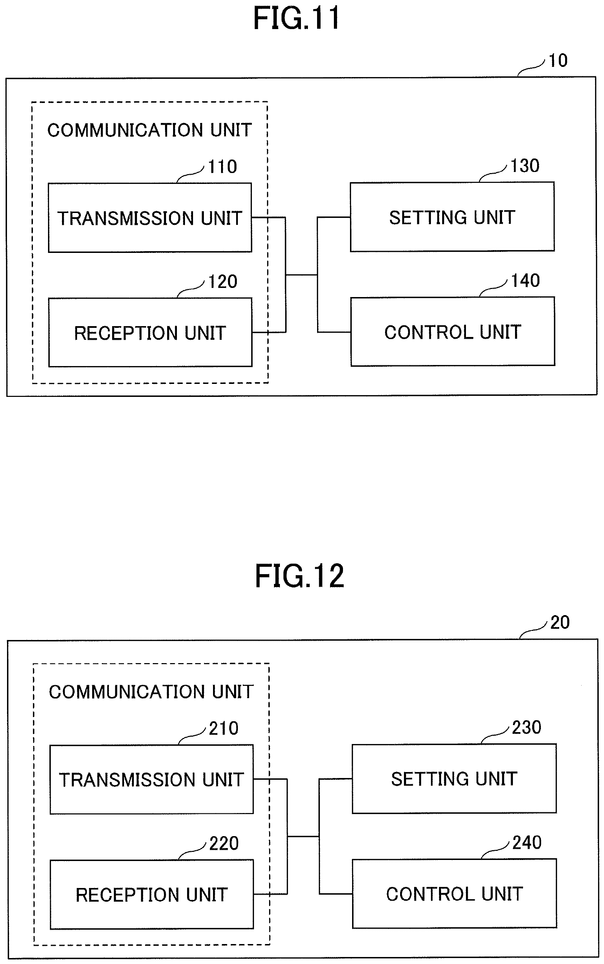

Fig. 11 is a diagram illustrating an example of a functional configuration of the base station apparatus 10. As shown in Fig. 11, the base station apparatus 10 includes a transmission unit 110, a reception unit 120, a setting unit 130, and a control unit 140. The functional configuration shown in FIG. 11 is only one example. If the operation according to the embodiments of the present invention can be performed, the functional category and the name of the functional unit may be any one. The transmission unit 110 and the reception unit 120 may be collectively referred to as a communication unit.

The transmission unit 110 includes a function for generating a signal to be transmitted to the user terminal 20 side and transmitting the signal wirelessly. The receiving unit 120 includes a function for receiving various signals transmitted from the user terminal 20 and acquiring, for example, information of a higher layer from the received signals. The transmission unit 110 has a function to transmit NR-PSS, NR-SSS, NR-PBCH, and DL/UL control signals, DCI by PDCCH, data by PDSCH, and the like to the user terminal 20.

The setting unit 130 stores pre-configured configuration information and various configuration information to be transmitted to the user terminal 20 in the storage device provided by the setting unit 130 and reads the configuration information from the storage device as necessary.

The control unit 140 schedules the DL reception or UL transmission of the user terminal 20 through the transmission unit 110. The control unit 140 includes a function for performing an LBT. A function unit related to signal transmission in the control unit 140 may be included in the transmission unit 110, and a function unit related to signal reception in the control unit 140 may be included in the receiving unit 120. The transmitter unit 110 may be called a transmitter, and the receiver unit 120 may be called a receiver.

### <User terminal 20>

Fig. 12 is a diagram illustrating an example of the functional configuration of the user terminal 20. As shown in Fig. 12, the user terminal 20 includes a transmission unit 210, a reception unit 220, a setting unit 230, and a control unit 240. The functional configuration shown in FIG. 12 is only one example. If the operation according to the embodiments of the present invention can be performed, the functional category and the name of the functional unit may be any one. The transmission unit 210 and the reception unit 220 may be collectively referred to as a communication unit. The user terminal 20 may be referred to as a terminal.

The transmission unit 210 creates a transmission signal from the transmission data and wirelessly transmits the transmission signal. The receiving unit 220 receives various signals wirelessly and acquires signals from higher layers from the received signal of the physical layer. The receiving unit 220 has a function to receive the NR-PSS, NR-SSS, NR-PBCH, and DL/UL/SL control signals transmitted from the base station apparatus 10, the DCI by the PDCCH, data by the PDSCH, and the like. For example, the transmitting unit 210 may transmit PSCCH (Physical Sidelink Control Channel), PSSCH (Physical Sidelink Shared Channel), PSDCH (Physical Sidelink Discovery Channel), PSBCH (Physical Sidelink Broadcast Channel), etc. to another user terminal 20 as D2D communication, and the receiving unit 120 may receive PSCCH, PSSCCH, PSDCH, PSDCH, or PSBCH, etc. from another user terminal 20.

The setting unit 230 stores various configuration information received from the base station apparatus 10 or the user terminal 20 by the reception unit 220 in the storage device provided by the setting unit 230 and reads it from the storage device as necessary. The setting unit 230 also stores the preconfigured configuration information.

The control unit 240 performs control of the user terminal 20. The control section 240 also includes a function for performing an LBT. A function unit related to signal transmission in the control unit 240 may be included in the transmission unit 210, and a function unit related to signal reception in the control unit 240 may be included in the receiving unit 220. The transmitter unit 210 may be referred to as a transmitter, and the receiver unit 220 may be referred to as a receiver. The carrier sense in the LBT may be performed by the receiving unit 220 or by the transmitting unit 210.

### [Summary]

According to the present embodiment, at least terminals and a transmission method shown in the following items 1 to 6 are provided.

### (Item 1)

A terminal including:
a reception unit 220 configured to receive control information indicating an uplink transmission;
a control unit 240 configured to determine a type of LBT to be performed for the uplink transmission based on at least one of, for the uplink transmission indicated by the control information,
   a gap,
   a type of a channel or a signal, and
   a transmission time length; and
a transmission unit configured to perform the uplink transmission by applying the type of LBT determined by the control unit.

### (Item 2)

The terminal according to item 1, wherein the control information includes information indicating whether the type of LBT is Category 4 or not, and the control unit determines a type of LBT other than Category 4 in a case where the type of LBT indicated by the information is not Category 4.

### (Item 3)

The terminal according to item 1 or 2, wherein the control unit determines a time length of a carrier sense in the LBT of category 2 according to a time length of the gap in the uplink transmission.

### (Item 4)

The terminal according to any one of items 1 to 3, wherein the control unit determines to apply the LBT of Category 2 in a case where the uplink transmission includes a PUSCH transmission not including UCI or an SRS transmission.

### (Item 5)

The terminal according to any one of items 1 to 4, wherein the control unit determines to apply the LBT of Category 2 in a case where the transmission time length of the uplink transmission is greater than a threshold value.

### (Item 6)

A transmission method of a terminal, including:
receiving control information indicating uplink transmission;
determining a type of LBT to be performed for the uplink transmission based on at least one of, for the uplink transmission indicated by the control information,
   a gap,
   a type of a channel or a signal type, and
   a transmission time length; and
performing the uplink transmission by applying the determined type of LBT.

Any of the configurations described in items 1 to 6 provides a technique that allows the user terminal to appropriately determine the category of LBT to be performed when performing uplink transmission.

### <Hardware configuration>

The block diagrams (FIGs. 11 and 12) used for explaining the above embodiment illustrate blocks in units of functions. These functional blocks (constituting units) are implemented by any combinations of at least one of hardware and software. In this regard, a method for implementing the various functional blocks is not particularly limited. That is, each functional block may be implemented by one device united physically and logically. Alternatively, each functional block may be implemented by connecting directly or indirectly (for example, in a wired or wireless manner) two or more devices that are physically or logically separated and connected together and using these multiple devices. The functional block may be implemented by combining software with the single device or multiple devices.

Functions include, but are not limited to, determining, calculating, processing, deriving, investigating, searching, confirming, receiving, transmitting, outputting, accessing, resolving, selecting, establishing, comparing, assuming, expecting, considering, broadcasting, notifying, communicating, forwarding, configuring, reconfiguring, allocating, mapping, assigning, and the like. For example, a functional block (constituting unit) that has a function of transmitting is referred to as a transmitting unit or a transmitter. As described above, a method for implementing these functions is not particularly limited.

For example, the base station apparatus 10, the user terminal 20, and the like according to one embodiment of the present disclosure may function as a computer that performs processing of a wireless communication according to the present disclosure. FIG. 24 is a drawing illustrating an example of a hardware configuration of the base station apparatus 10 or the user terminal 20 according to an embodiment of the present disclosure. Each of the base station apparatus 10 and user terminal 20 may be physically configured as a computer device including a processor 1001, a storage device 1002, an auxiliary storage device 1003, a communication device 1004, an input device 1005, an output device 1006, a bus 1007, and the like.

It is noted that, in the following description, the term "device" may be read as a circuit, an apparatus, a unit, or the like. The hardware configurations of the base station apparatus 10 and the user terminal 20 may be configured to include one or more of the devices illustrated in drawings, or may be configured not to include some of the devices.

Each function of the base station apparatus 10 and the user terminal 20 may be implemented by reading predetermined software (program) to hardware such as the processor 1001, the storage device 1002, or the like, causing the processor 1001 to perform operations, controlling communication by the communication device 1004, and controlling at least one of reading and writing of data in the storage device 1002 and the auxiliary storage device 1003.

The processor 1001 executes, for example, an operating system to control the overall operation of the computer. The processor 1001 may be a central processing unit (CPU) including an interface with peripheral devices, a control device, an arithmetic device, a register, and the like. For example, the control unit 140, the control unit 240, and the like described above may be realized by the processor 1001.

The processor 1001 reads a program (program code), a software module, or data from at least one of the auxiliary storage device 1003 and the communication device 1004 onto the storage device 1002, and performs various processes according to the program, the software module, or the data. As the program, a program that causes a computer to perform at least some of the operations described in the embodiment explained above is used. For example, the control unit 140 of the base station apparatus 10, as illustrated in FIG. 11, may be implemented by a control program that is stored in the storage device 1002 and that is executed by the processor 1001. Also, for example, the control unit 240 of the user terminal 20, as illustrated in FIG. 12, may be implemented by a control program that is stored in the storage device 1002 and that is executed by the processor 1001. Explanation has been provided above for the case in which the above various processing are performed by the single processor 1001. However, such processing may be simultaneously or sequentially performed by two or more processors 1001. The processor 1001 may be implemented with one or more chips. It is noted that the program may be transmitted from a network through an electronic communication line.

The storage device 1002 is a computer-readable recording medium and may be constituted by at least one of, for example, a ROM (Read Only Memory), an EPROM (Erasable Programmable ROM), an EEPROM (Electrically Erasable Programmable ROM), a RAM (Random Access Memory), and the like. The storage device 1002 may also be referred to as a register, a cache, a main memory (main storage device), or the like. The storage device 1002 can store a program (program code), a software module and the like that can be executed to perform a communication method according to an embodiment of the present disclosure.

The auxiliary storage device 1003 is a computer-readable recording medium and may be configured by at least one of, for example, an optical disk such as a CD-ROM (Compact Disc ROM), a hard disk drive, a flexible disk, a magneto-optical disk (for example, a compact disk, a digital versatile disk, or a Blu-ray (registered trademark) disk), a smart card, a flash memory (for example, a card, a stick, or a key drive), a floppy (registered trademark) disk, a magnetic strip, and the like. The auxiliary storage device 1003 may be referred to as an auxiliary storage device. The above storage medium may be, for example, a database, a server, or other appropriate media including at least one of the storage device 1002 and the auxiliary storage device 1003.

The communication device 1004 is hardware (a transmission and reception device) for performing communication between computers through at least one of a wired and wireless networks and may also be referred to as, for example, a network device, a network controller, a network card, a communication module, or the like. The communication device 1004 may include, for example, a radio frequency switch, a duplexer, a filter, a frequency synthesizer, or the like to implement at least one of a frequency division duplex (FDD) and a time division duplex (TDD). For example, a transmission and reception antenna, an amplifier, a transmitting and receiving unit, a transmission line interface, and the like may be implemented by the communication device 1004. The transmitting and receiving unit may be implemented in such a manner that a transmitting unit and a receiving unit are physically or logically separated.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs an output to the outside. It is noted that the input device 1005 and the output device 1006 may be integrated with each other (for example, a touch panel).

The devices, such as the processor 1001 and the storage device 1002, are connected to each other via a bus 1007 for communicating information. The bus 1007 may be constituted by using a single bus, or may be constituted by using busses different depending on devices.

The base station apparatus 10 and the user terminal 20 may include hardware, such as a microprocessor, a digital signal processor (DSP), an ASIC (Application Specific Integrated Circuit), a PLD (Programmable Logic Device), or an FPGA (Field Programmable Gate Array), or alternatively, some or all of the functional blocks may be implemented by the hardware. For example, the processor 1001 may be implemented with at least one of these hardware components.

### <Supplements to Embodiment>

The embodiment of the present invention has been described above, but the disclosed invention is not limited to the above embodiment, and those skilled in the art would understand that various modified examples, revised examples, alternative examples, substitution examples, and the like can be made. In order to facilitate understanding of the present invention, specific numerical value examples are used for explanation, but the numerical values are merely examples, and any suitable values may be used unless otherwise stated. Classifications of items in the above description are not essential to the present invention, contents described in two or more items may be used in combination if necessary, and contents described in an item may be applied to contents described in another item (unless a contradiction arises). The boundaries between the functional units or the processing units in the functional block diagrams do not necessarily correspond to the boundaries of physical components. Operations of a plurality of functional units may be physically implemented by a single component and an operation of a single functional unit may be physically implemented by a plurality of components. Concerning the processing procedures described above in the embodiment, the orders of steps may be changed unless a contradiction arises. For the sake of convenience for describing the processing, the base station apparatus 10 and the user terminal 20 have been described with the use of the functional block diagrams, but these apparatuses may be implemented by hardware, software, or a combination thereof. Each of software functioning with a processor of the base station apparatus 10 according to the embodiment of the present invention and software functioning with a processor of the user terminal 20 according to the embodiment of the present invention may be stored in a random access memory (RAM), a flash memory, a read-only memory (ROM), an EPROM, an EEPROM, a register, a hard disk (HDD), a removable disk, a CD-ROM, a database, a server, or any suitable recording media.

Also, the notification of information is not limited to the aspect or embodiment described in the present disclosure, but may be performed by other methods. For example, the notification of information may be performed by physical layer signaling (for example, DCI (Downlink Control Information), UCI (Uplink Control Information)), higher layer signaling (for example, RRC (Radio Resource Control) signaling, MAC (Medium Access Control) signaling, broadcast information (an MIB (Master Information Block) and an SIB (System Information Block)), other signals, or combinations thereof. The RRC signaling may be also be referred to as an RRC message and may be, for example, an RRC connection setup message, an RRC connection reconfiguration message, or the like.

Each aspect and embodiment described in the present disclosure may be applied to at least one of a system that uses a suitable system such as LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (New Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), or Bluetooth (registered trademark), and a next-generation system expanded on the basis thereof. Also a plurality of systems may be combined and applied (for example, a combination of at least one of LTE and LTE-A with 5G, and the like).

In the operation procedures, sequences, flowcharts, and the like according to each aspect and embodiment described in the present disclosure, the orders of steps may be changed unless a contradiction arises. For example, in the methods described in the present disclosure, elements of various steps are illustrated by using an exemplary order and the methods are not limited to the specific orders presented.

The specific operations performed by the base station apparatus 10 described in the present disclosure may in some cases be performed by an upper node. It is clear that, in a network that includes one or more network nodes including the base station apparatus 10, various operations performed for communication with the user terminal 20 can be performed by at least one of the base station apparatus 10 and another network node other than the base station apparatus 10 (for example, a MME, a S-GW, or the like may be mentioned, but not limited thereto). In the above, the description has been made for the case where another network node other than the base station apparatus 10 is a single node as an example. But the another network node may be a combination of a plurality of other network nodes (for example, a MME and a S-GW).

Information, signals, or the like described in the present disclosure may be output from a higher layer (or a lower layer) to a lower layer (or a higher layer). Information, signals, or the like described in the present disclosure may be input and output via a plurality of network nodes.

Information or the like that has been input or output may be stored at a predetermined place (for example, a memory) and may be managed with the use of a management table. Information or the like that is input or output can be overwritten, updated, or appended. Information or the like that has been output may be deleted. Information or the like that has been input may be transmitted to another apparatus.

In the present disclosure, determination may be made with the use of a value expressed by one bit (0 or 1), may be made with the use of a Boolean value (true or false), and may be made through a comparison of numerical values (for example, a comparison with a predetermined value).

Regardless of whether software is referred to as software, firmware, middleware, microcode, a hardware description language, or another name, software should be interpreted broadly to mean instructions, instruction sets, codes, code segments, program codes, a program, a sub-program, a software module, an application, a software application, a software package, a routine, a subroutine, an object, an executable file, an execution thread, a procedure, a function, and the like.

Software, instructions, information, or the like may be transmitted and received through transmission media. For example, in a case where software is transmitted from a website, a server or another remote source through at least one of wired technology (such as a coaxial cable, an optical-fiber cable, a twisted pair, or a digital subscriber line (DSL)) and radio technology (such as infrared or microwaves), at least one of the wired technology and the radio technology is included in the definition of a transmission medium.

Information, signals, and the like described in the present disclosure may be expressed with the use of any one of various different technologies. For example, data, instructions, commands, information, signals, bits, symbols, chips, and the like mentioned herein throughout the above explanation may be expressed by voltages, currents, electromagnetic waves, magnetic fields or magnetic particles, optical fields or photons, or any combinations thereof.

The terms described in the present disclosure and the terms necessary for understanding the present disclosure may be replaced with terms having the same or similar meanings. For example, at least one of a channel and a symbol may be a signal (signaling) . A signal may be a message. A component carrier (CC) may be referred to as a carrier frequency, a cell, a frequency carrier, or the like.

The terms "system" and "network" used in the present disclosure are used interchangeably.

Information, parameters, and the like described in the present disclosure may be expressed by absolute values, may be expressed by relative values with respect to predetermined values, and may be expressed by corresponding different information. For example, radio resources may be indicated by indexes.

The above-described names used for the parameters are not restrictive in any respect. In addition, formulas or the like using these parameters may be different from those explicitly disclosed in the present disclosure. Various channels (for example, a PUSCH, a PUCCH, a PDCCH, and the like) and information elements can be identified by any suitable names, and therefore, various names given to these various channels and information elements are not restrictive in any respect.

In the present disclosure, terms such as "base station (BS)", "radio base station", "base station apparatus", "fixed station", "NodeB", "eNodeB (eNB)", "gNodeB (gNB)", "access point", "transmission point", "reception point", "transmission/reception point", "cell", "sector", "cell group", "carrier", "component carrier", and the like may be used interchangeably. A base station may be referred to as a macro-cell, a small cell, a femtocell, a pico-cell, or the like.

A base station can accommodate one or a plurality of (for example, three) cells (that may be called sectors) . In a case where a base station accommodates a plurality of cells, the whole coverage area of the base station can be divided into a plurality of smaller areas. For each smaller area, a base station subsystem (for example, an indoor miniature base station RRH (Remote Radio Head)) can provide a communication service. The term "cell" or "sector" denotes all or a part of the coverage area of at least one of a base station and a base station subsystem that provides communication services in the coverage.

In the present disclosure, terms such as "mobile station (MS)", "user terminal", "user equipment (UE)", and "terminal" may be used interchangeably.

By the person skilled in the art, a mobile station may be referred to as any one of a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, and other suitable terms.

At least one of a base station and a mobile station may be referred to as a transmitting apparatus, a receiving apparatus, a communication apparatus, or the like. At least one of a base station and a mobile station may be an apparatus mounted on a mobile body, or may be a mobile body itself, or the like. A mobile body may be a transporting device (e.g., a vehicle, an airplane, and the like), an unmanned mobile (e.g., a drone, an automated vehicle, and the like), or a robot (of a manned or unmanned type) . It is noted that at least one of a base station and a mobile station includes an apparatus that does not necessarily move during a communication operation. For example, at least one of a base station and a mobile station may be an IoT (Internet of Thing) device such as a sensor.

In addition, a base station apparatus according to the present disclosure may be read as a user terminal. For example, each aspect or embodiment of the present disclosure may be applied to a configuration in which communication between a base station apparatus and a user terminal is replaced by communication between a plurality of user terminals 20 (that may be called D2D (Device-to-Device), V2X (Vehicle-to-Everything), or the like). In this case, a user terminal 20 may have above-described functions of the base station apparatus 10. In this regard, a word such as "up" or "down" may be read as a word corresponding to communication between terminals (for example, "side") . For example, an uplink channel, a downlink channel, or the like may be read as a side channel.

Similarly, a user terminal according to the present disclosure may be replaced with a base station apparatus. In this case, a base station apparatus may have above-described functions of the user terminal.

The term "determine" used herein may mean various operations. For example, judging, calculating, computing, processing, deriving, investigating, looking up, searching, inquiring (for example, looking up a table, a database, or another data structure), ascertaining, or the like may be deemed as making determination. Also, receiving (for example, receiving information), transmitting (for example, transmitting information), inputting, outputting, or accessing (for example, accessing data in a memory), or the like may be deemed as making determination. Also, resolving, selecting, choosing, establishing, comparing, or the like may be deemed as making determination. That is, doing a certain operation may be deemed as making determination. "To determine" may be read as "to assume", "to expect", "to consider", or the like.

Each of the terms "connected" and "coupled" and any variations thereof mean any connection or coupling among two or more elements directly or indirectly and can mean that one or a plurality of intermediate elements are inserted among two or more elements that are "connected" or "coupled" together. Coupling or connecting among elements may be physical one, may be logical one, and may be a combination thereof. For example, "connecting" may be read as "accessing". In a case where the terms "connected" and "coupled" and any variations thereof are used in the present disclosure, it may be considered that two elements are "connected" or "coupled" together with the use of at least one type of a medium from among one or a plurality of wires, cables, and printed conductive traces, and in addition, as some non-limiting and non-inclusive examples, it may be considered that two elements are "connected" or "coupled" together with the use of electromagnetic energy such as electromagnetic energy having a wavelength of the radio frequency range, the microwave range, or the light range (including both of the visible light range and the invisible light range).

A reference signal can be abbreviated as an RS (Reference Signal). A reference signal may be referred to as a pilot depending on an applied standard.

A term "based on" used in the present disclosure does not mean "based on only" unless otherwise specifically noted. In other words, a term "base on" means both "based on only" and "based on at least".

Any references to elements denoted by a name including terms such as "first" or "second" used in the present disclosure do not generally limit the amount or the order of these elements. These terms can be used in the present disclosure as a convenient method for distinguishing one or a plurality of elements. Therefore, references to first and second elements do not mean that only the two elements can be employed or that the first element should be, in some way, prior to the second element.

"Means" in each of the above apparatuses may be replaced with "unit", "circuit", "device", or the like.

In a case where any one of "include", "including", and variations thereof is used in the present disclosure, each of these terms is intended to be inclusive in the same way as the term "comprising". Further, the term "or" used in the present disclosure is intended to be not exclusive-or.

A radio frame may include, in terms of time domain, one or a plurality of frames. Each of one or a plurality of frames may be referred to as a subframe in terms of time domain. A subframe may include, in terms of time domain, one or a plurality of slots. A subframe may have a fixed time length (e.g., 1 ms) independent of Numerology.

Numerology may be a communication parameter that is applied to at least one of transmission and reception of a signal or a channel. Numerology may mean, for example, at least one of a subcarrier spacing (SCS), a bandwidth, a symbol length, a cyclic prefix length, a transmission time interval (TTI), the number of symbols per TTI, a radio frame configuration, a specific filtering processing performed by a transceiver in frequency domain, a specific windowing processing performed by a transceiver in time domain, and the like.

A slot may include, in terms of time domain, one or a plurality of symbols (OFDM (Orthogonal Frequency Division Multiplexing) symbols, SC-FDMA (Single Carrier Frequency Division Multiplexing) symbols) symbols, or the like). A slot may be a time unit based on Numerology.

A slot may include a plurality of minislots. Each minislot may include one or a plurality of symbols in terms of the time domain. A minislot may also be referred to as a subslot. A minislot may include fewer symbols than a slot. A PDSCH (or PUSCH) transmitted at a time unit greater than a minislot may be referred to as a PDSCH (or PUSCH) mapping type A. A PDSCH (or PUSCH) transmitted using minislots may be referred to as a PDSCH (or PUSCH) mapping type B.

Each of a radio frame, a subframe, a slot, a minislot, and a symbol means a time unit configured to transmit a signal. Each of a radio frame, a subframe, a slot, a minislot, and a symbol may be referred to as other names respectively corresponding thereto.

For example, one subframe may be referred to as a transmission time interval (TTI), a plurality of consecutive subframes may be referred to as a TTI, and one slot or one minislot may be referred to as a TTI. That is, at least one of a subframe and a TTI may be a subframe (1 ms) according to the existing LTE, may have a period shorter than 1 ms (e.g., 1 to 13 symbols), and may have a period longer than 1 ms. Instead of subframes, units expressing a TTI may be referred to as slots, minislots, or the like. Also, one slot may be referred to as unit time. The unit time may be different for each cell according to the numerology.

A TTI means, for example, a minimum time unit of scheduling in radio communication. For example, in an LTE system, a base station performs scheduling for each user terminal 20 to assign, in TTI units, radio resources (such as frequency bandwidths, transmission power, and the like that can be used by each user terminal 20). However, the definition of a TTI is not limited thereto.

A TTI may be a transmission time unit for channel-coded data packets (transport blocks), code blocks, code words, or the like, and may be a unit of processing such as scheduling, link adaptation, or the like. When a TTI is given, an actual time interval (e.g., the number of symbols) to which transport blocks, code blocks, code words, or the like are mapped may be shorter than the given TTI.

In a case where one slot or one minislot is referred to as a TTI, one or a plurality of TTIs (i.e., one or a plurality of slots or one or a plurality of minislots) may be a minimum time unit of scheduling. The number of slots (the number of minislots) included in the minimum time unit of scheduling may be controlled.

A TTI having a time length of 1 ms may referred to as an ordinary TTI (a TTI according to LTE Rel.8-12), a normal TTI, a long TTI, an ordinary subframe, a normal subframe, a long subframe, a slot, or the like. A TTI shorter than an ordinary TTI may be referred to as a shortened TTI, a short TTI, a partial or fractional TTI, a shortened subframe, a short subframe, a minislot, a subslot, a slot, or the like.

Note that a long TTI (for example, normal TTI, subframe, and the like) may be read as TTI having a time length exceeding 1 ms, and a short TTI (for example, shortened TTI) may be read as a TTI having a TTI length less than the TTI length of the long TTI and equal to or more than 1 ms.

A resource block (RB) is a resource assignment unit in terms of time domain and frequency domain and may include one or a plurality of consecutive subcarriers in terms of frequency domain. The number of subcarriers included in an RB may be the same regardless of Numerology, and, for example, may be 12. The number of subcarriers included in a RB may be determined based on Numerology.

In terms of time domain, an RB may include one or a plurality of symbols, and may have a length of 1 minislot, 1 subframe, or 1 TTI. Each of 1 TTI, 1 subframe, and the like may include one or a plurality of resource blocks.

One or a plurality of RBs may be referred to as physical resource blocks (PRBs: Physical RBs), a subcarrier group (SCG: Sub-Carrier Group), a resource element group (REG: Resource Element Group), a PRB pair, an RB pair, or the like.

A resource block may include one or a plurality of resource elements (RE: Resource Elements). For example, 1 RE may be a radio resource area of 1 subcarrier and 1 symbol.

A bandwidth part (BWP) (which may be called a partial bandwidth or the like) may mean a subset of consecutive common RBs (common resource blocks) for Numerology, in any given carrier. A common RB may be identified by a RB index with respect to a common reference point in the carrier. PRBs may be defined by a BWP and may be numbered in the BWP.

A BWP may include a BWP (UL BWP) for UL and a BWP (DL BWP) for DL. For a UE, one or a plurality of BWPs may be set in 1 carrier.

At least one of BWPs that have been set may be active, and a UE need not assume sending or receiving a predetermined signal or channel outside the active BWP. A "cell", a "carrier" or the like in the present disclosure may be read as a "BWP".

The above-described structures of radio frames, subframes, slots, minislots, symbols, and the like are merely examples. For example, the number of subframes included in a radio frame, the number of slots included in a subframe or a radio frame, the number of minislots included in a slot, the number of symbols and the number of RBs included in a slot or a minislot, the number of subcarriers included in an RB, the number of symbols included in a TTI, a symbol length, a cyclic prefix (CP) length, and the like can be variously changed.

Throughout the present disclosure, in a case where an article such as "a", "an", or "the" in English is added through a translation, the present disclosure may include a case where a noun following such article is of a plural forms.

Throughout the present disclosure, an expression that "A and B are different" may mean that "A and B are different from each other" . Also this term may mean that "each of A and B is different from C". Terms such as "separate" and "coupled" may also be interpreted in a manner similar to "different".

Each aspect or embodiment described in the present disclosure may be solely used, may be used in combination with another embodiment, and may be used in a manner of being switched with another embodiment upon implementation. Notification of predetermined information (for example, notification of "being x") may be implemented not only explicitly but also implicitly (for example, by not notifying predetermined information).

Although the present disclosure has been described above, it will be understood by those skilled in the art that the present disclosure is not limited to the embodiment described in the present disclosure. Modifications and changes of the present disclosure may be possible without departing from the subject matter and the scope of the present disclosure defined by claims. Therefore, the descriptions of the present disclosure are for illustrative purposes only, and are not intended to be limiting the present disclosure in any way.

### [Description of Symbols]

10 Base station apparatus
110 Transmission unit
120 Reception unit
130 Setting unit
140 Control unit
20 User terminal
210 Transmission unit
220 Reception unit
230 Setting unit
240 Control unit
1001 Processor
1002 Storage memory
1003 Auxiliary store
1004 Communication device
1005 Input device
1006 Output device

## Claims

1. A terminal comprising:
a reception unit configured to receive control information indicating an uplink transmission;
a control unit configured to determine a type of LBT to be performed for the uplink transmission based on at least one of, for the uplink transmission indicated by the control information,
a gap,
a type of a channel or a signal, and
a transmission time length; and
a transmission unit configured to perform the uplink transmission by applying the type of LBT determined by the control unit.

2. The terminal according to claim 1, wherein the control information includes information indicating whether the type of LBT is Category 4 or not, and the control unit determines a type of LBT other than Category 4 in a case where the type of LBT indicated by the information is not Category 4.

3. The terminal according to claim 1 or 2, wherein the control unit determines a time length of a carrier sense in the LBT of category 2 according to a time length of the gap in the uplink transmission.

4. The terminal according to any one of claims 1 to 3, wherein the control unit determines to apply the LBT of Category 2 in a case where the uplink transmission includes a PUSCH transmission not including UCI or an SRS transmission.

5. The terminal according to any one of claims 1 to 4, wherein the control unit determines to apply the LBT of Category 2 in a case where the transmission time length of the uplink transmission is greater than a threshold value.

6. A transmission method of a terminal, comprising:
receiving control information indicating uplink transmission;
determining a type of LBT to be performed for the uplink transmission based on at least one of, for the uplink transmission indicated by the control information,
a gap,
a type of a channel or a signal type, and
a transmission time length; and
performing the uplink transmission by applying the determined type of LBT.
